Europäisches Patentamt

European Patent Office

Office européen des brevets

(19)

(11) **EP 0 499 320 B1**

(12) **FASCICULE DE BREVET EUROPEEN**

(45) Date de publication et mention
de la délivrance du brevet:
**08.05.1996  Bulletin 1996/19**

(51) Int Cl.[6]: **G01S 3/74**, H04N 3/15,
G01S 3/786

(21) Numéro de dépôt: **92200327.2**

(22) Date de dépôt: **06.02.1992**

(54) **Dispositif de détermination de la direction d'une source émissive de faible luminosité et son application à la visée stellaire**

Einrichtung zur Richtungsbestimmung einer Strahlungsquelle geringer Leuchtstärke und Anwendung zur Sternbeobachtung

Arrangement for the determination of the direction of a weak radiation-source and application to stellar observation

(84) Etats contractants désignés:
**DE FR GB IT**

(30) Priorité: **15.02.1991  FR 9101815**

(43) Date de publication de la demande:
**19.08.1992  Bulletin 1992/34**

(73) Titulaires:
• **SOCIETE ANONYME D'ETUDES ET REALISATIONS NUCLEAIRES S.O.D.E.R.N.**
**F-94450 Limeil-Brevannes (FR)**
Etats contractants désignés:
**FR**
• **Philips Electronics N.V.**
**5621 BA Eindhoven (NL)**
Etats contractants désignés:
**DE GB IT**

(72) Inventeurs:
• **Vilaire, Didier, Société Civile S.P.I.D.**
**F-75008 Paris (FR)**
• **Pezant, Christian, Société Civile S.P.I.D.**
**F-75008 Paris (FR)**

(74) Mandataire: **Pyronnet, Jacques et al**
**Société Civile S.P.I.D.**
**156, Boulevard Haussmann**
**F-75008 Paris (FR)**

(56) Documents cités:
EP-A- 0 135 065          WO-A-90/13199
FR-A- 2 569 842          FR-A- 2 598 019
US-A- 4 430 673

• **PATENT ABSTRACTS OF JAPAN, DATABASE JAPS/JPO vol. 13, no. 47 (P-822), 3 février 1989; & JP - A - 63241415 (TOSHIBA) 06.10.1988**

# Description

La présente invention concerne un dispositif de détermination en mode de recherche de la direction d'une source émissive de faible luminosité comportant un objectif formant de ladite source émissive une image sur un détecteur photosensible constitué par une matrice de détection par transfert de charges comportant un registre de lecture et un étage de sortie du registre de lecture et comportant en outre des moyens de lecture pour lire une sous matrice de détection contenant ladite image, par groupes de 4 ou 9 pixels disposés en carré, ladite lecture étant effectuée par transferts successifs dans le registre de lecture des lignes groupées 2 à 2, ou 3 à 3, puis dans l'étage de sortie par transferts successifs des éléments du registre de lecture groupés 2 à 2, ou 3 à 3.

Un tel dispositif est connu par exemple du document EP-A-0 384 527.

Une application particulièrement avantageuse du dispositif selon l'invention consiste en la détection d'étoiles de faible luminosité (de grande magnitude) en présence d'un bruit de fond important.

Afin d'obtenir les deux informations (en coordonnées cartésiennes) permettant de déterminer complètement la direction de l'objet lumineux observé, il est connu, notamment du brevet des Etats-Unis d'Amérique n° 4 430 673 d'utiliser un détecteur photosensible constitué par une matrice de détection à transfert de charges. Ce détecteur se présente comme une mosaïque d'éléments d'image (pixels) divisée en deux parties : une première moitié, la zone photosensible est destinée à recevoir et à détecter le rayonnement lumineux en provenance de l'objet visé, et la deuxième moitié, recouverte ou non d'un film opaque, sert de mémoire analogique dans laquelle sont stockées, par transfert de charges, les informations reçues par la première moitié de la matrice pendant une durée dite durée d'intégration. Les deux moitiés du détecteur matriciel ont, de préférence, des commandes de transfert de charge séparées. Un registre de lecture reçoit ensuite, toujours par transfert de charges, ligne par ligne, les informations contenues dans la zone mémoire, puis ces informations sont fournies sous forme analogique à un étage de sortie à partir duquel elles peuvent être lues pixel par pixel de façon à pouvoir reconstituer, sous forme numérique, l'image préalablement obtenue sur la zone photosensible. Pour la visée stellaire notamment, un premier mode de fonctionnement du dispositif, dit mode de recherche, consiste à définir, dans une sous matrice de détection dite fenêtre de recherche contenue dans la matrice décrite plus haut, la position, au pixel près, de l'objet lumineux recherché, étant entendu que la fenêtre de recherche a été préalablement définie à partir d'un senseur inertiel, par exemple, installé sur le même appareil que le dispositif de visée de l'objet lumineux. Quelle que soit sa magnitude, l'objet lumineux observé, en général une étoile, résulte, sur la matrice de détection en un point lumineux dont le diamètre est inférieur à celui du pixel en supposant une focalisation correcte, effectuée par l'objectif. En mode de recherche, le pixel qui reçoit ainsi tout le signal de la source émissive (l'étoile) recherché permet d'atteindre le but indiqué ci-dessus en donnant la direction de l'étoile par ses coordonnées avec une précision égale à 0,5 fois le côté d'un pixel. Cependant, le mode de recherche est généralement suivi d'un deuxième mode dit mode de mesure qui vise à déterminer avec une précision encore accrue (dans un rapport 10 environ) la direction de l'étoile. Pour le mode de mesure, l'image de l'étoile sur la matrice de détection est défocalisée de façon à recouvrir une surface supérieure à celle d'un pixel et le centre énergétique de l'image de l'étoile sur la matrice est déterminé par calcul barycentrique des pixels, en particulier des pixels touchés par le rayonnement défocalisé de l'étoile recherchée. Dans ce cas, il n'est pas prévu de modifier la focalisation entre le mode de recherche et le mode de lecture. L'invention se place dans le contexte, soit d'une absence de défocalisation, soit d'une telle défocalisation permanente fixe selon laquelle l'image de la source émissive a un diamètre supérieur au côté d'un pixel et de préférence de l'ordre de 2 à 2,5 fois ce côté. L'invention est particulièrement avantageuse en présence de défocalisation.

Le problème technique précis qui se pose alors dans le contexte précité, est de collecter, dans la fenêtre de recherche, avec une précision de l'ordre du côté du pixel et avec le meilleur rapport signal sur bruit possible, le maximum de signal possible de l'étoile recherchée.

Ce problème technique est résolu et les inconvénients de l'art antérieur sont atténués grâce au fait que le dispositif de recherche défini en préambule est remarquable en ce que, selon un premier mode de réalisation lesdits moyens de lecture sont conçus pour décaler deux transferts successifs depuis le registre de lecture, d'un élément de ce registre, de façon à obtenir des signaux de lecture de 4 ou 9 pixels groupés de la sous matrice disposés en quinconce et à déterminer ainsi la zone carrée de 4 ou 9 pixels la plus brillante de la sous matrice correspondant à ladite image sur la sous matrice.

Pour une étoile statique, le signal lié au pixel de niveau le plus élevé dans la tache image peut, dans le cas le moins favorable ne représenter que 20 % du signal d'étoile, la tache image s'étendant à parts égales sur 4 pixels. Pour améliorer la probabilité de détection en supprimant l'inconvénient indiqué à la phrase précédente, on effectue la recherche, selon ce premier mode de réalisation, en cumulant les charges par groupes de pixels en carré répartis en quinconce de sorte que quelle que soit la position de la tache image dans la matrice, un des groupes cumule au moins le tiers du signal étoile dans le cas où le diamètre de cette dernière est double du côté du pixel. Ce premier mode de réalisation est efficace dans la mesure où le cumul des charges est effectué directement au niveau de la matrice. On évite ainsi de cumuler, en même temps que le signal intégré, le bruit de lecture lié à chaque pixel à savoir le bruit propre du détecteur, le bruit ramené par la chaîne de traitement analogique et le bruit de quantification.

Selon un deuxième mode de réalisation préféré de l'invention, le dispositif de recherche défini en préambule est remarquable en ce qu'il comporte en outre des moyens de mémorisation du signal de lecture en provenance d'une sous matrice de détection, contenant ladite image, pixel par pixel, et des moyens de lecture et de calcul d'information constitués par un microprocesseur pour :

- extraire desdits moyens de mémorisation l'information de l'ensemble formé par tous les groupes distincts de 4 respectivement 9 pixels disposés en carré, groupe par groupe,
- sommer l'information contenue dans les emplacements mémoire de chaque groupe,
- déterminer la zone carrée de 4 respectivement 9 pixels la plus brillante de la sous matrice correspondant à ladite image sur la sous matrice.

Cette deuxième solution, qu'on peut qualifier d'informatique, du problème technique posé, n'est pas optimale en ce qui concerne le rapport signal sur bruit ; d'autre part, elle est plus consommatrice d'emplacements mémoire, ce qui est coûteux pour les applications spatiales où il faut utiliser la technologie bipolaire, grosse consommatrice d'énergie. Par contre elle permet d'obtenir le maximum de signal possible de l'étoile recherchée, soit au moins les deux tiers de ce signal, dans les mêmes hypothèses que ci-dessus pour le premier mode de réalisation.

Pour les deux modes de réalisation, la légère perte en précision due au groupement des pixels (4 ou 9 au lieu d'1) est compensée par le gain en niveau obtenu pour l'étoile recherchée, ce qui est le plus important dans la phase de recherche.

Un autre avantage, propre au premier mode de réalisation, est de permettre une lecture plus rapide de la matrice de détection, par lecture groupée des lignes par deux ou par trois dans le registre de lecture ce qui raccourcit d'autant la durée de la phase de recherche.

On notera que l'idée de base de l'invention consiste à avoir le moins de fluctuation possible du signal d'étoile en fonction de sa position dans la trame que constituent les pixels de la matrice de détection.

La description qui suit en regard des dessins annexés, le tout donné à titre d'exemple fera bien comprendre comment l'invention peut être réalisée.

La figure 1 est un schéma en perspective d'un dispositif de recherche selon l'invention.

Les figures 2a et 2b montrent la répartition énergétique de la tache image de la source émissive sur la matrice de détection.

La figure 3 représente la matrice de détection d'un premier mode de réalisation de l'invention.

La figure 4 est un schéma synoptique d'un deuxième mode de réalisation de l'invention.

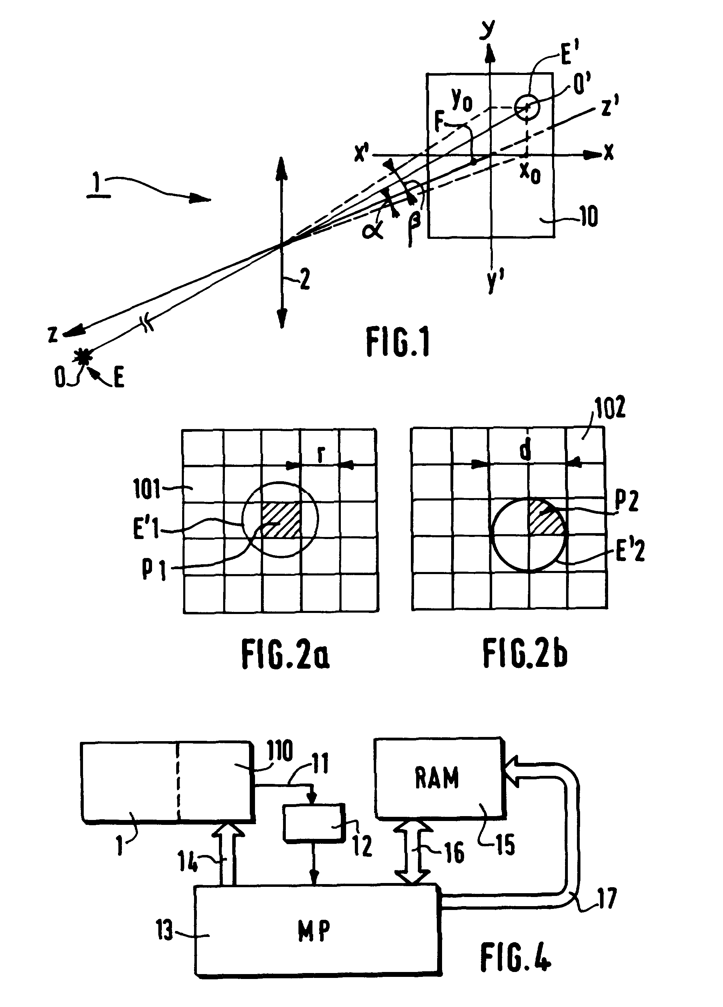

Sur la figure 1 est représenté schématiquement un viseur d'étoiles et, plus généralement un détecteur de position d'une source émissive de faible luminosité, référencé 1. Ce viseur ou détecteur de position comporte un objectif 2 qui forme de l'objet lumineux (de l'étoile) E, qui peut être considéré comme ponctuel et donc confondu avec son centre O, une image E' de centre O' sur un détecteur photosensible 10. Le détecteur 10 est une matrice à transfert de charges placée par exemple près du foyer F de l'objectif 2, c'est-à-dire dont la position par rapport à l'objectif est ajustée, moyennant une légère défocalisation permanente de telle manière que la tache image E' de l'objet lumineux recouvre plusieurs détecteurs élémentaires (éléments d'image ou pixels). On notera que, quelle que soit la magnitude de l'objet lumineux visé le diamètre de ce dernier, légèrement défocalisé, est sensiblement constant sur la matrice et par exemple égal à deux fois le côté r d'un pixel, les pixels étant supposés carrés, la quantité de photons reçus étant quant à elle fonction de la magnitude de l'objet lumineux visé. Le centre énergétique O' de l'image E' est repéré par ses coordonnées $x_0$ et $y_0$ dans un système d'axes Fx, Fy lié à la matrice 10. La détermination de $x_0$ et $y_0$ permet de calculer les angles $\alpha$ et $\beta$ définissant la direction O'O recherchée par rapport à l'axe optique z'z du viseur 1.

Aux figures 2a et 2b on a représenté une sous matrice 101, respectivement 102, de la matrice 10 sur laquelle apparaît la tache image E'1, respectivement E'2 de diamètre d(d = 2r). La sous matrice 101 ou 102 symbolise la fenêtre de recherche qui en pratique comporte un nombre de pixels nettement supérieur à 25. Sur la figure 2a, 9 pixels sont touchés par la tache image, le pixel central P1 recevant à lui seul 35,1 % du rayonnement issu de l'objet lumineux E. Sur la figure 2b, 4 pixels seulement sont atteints à parts égales, chacun de ces 4 pixels, par exemple le pixel P2 ne recevant que 20,4 % du rayonnement issu de E. L'étoile étant a priori la source la plus brillante dans la fenêtre de recherche, la détection est généralement effectuée, de façon connue, par recherche du pixel de niveau maximum. Toutefois, lors de la visée d'étoiles de magnitude élevée ou en présence d'un fond important, la probabilité de détection, c'est-à-dire la probabilité que le pixel de niveau maximal appartienne effectivement à l'image de l'étoile, devient très dépendante de la position de la tache image dans la matrice. En effet, dans le cas le plus défavorable de la figure 2b, pour une étoile statique, le signal lié au pixel de niveau le plus élevé dans la tache image ne représente que le cinquième du signal d'étoile.

Pour améliorer la probabilité de détection en supprimant l'inconvénient ci-dessus on effectue la recherche, selon l'invention, en cumulant les charges par groupes de 4 ou 9 pixels disposés en carré d'une façon particulière.

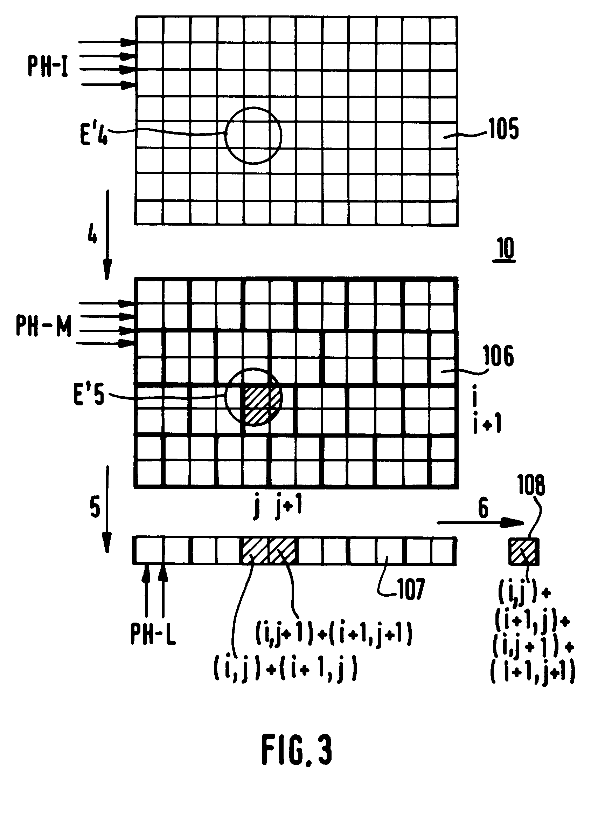

Selon un premier mode de réalisation explicité par la figure 3, les groupes carrés de pixels sont répartis en quinconce. La figure 3 représente symboliquement une matrice à transfert de charges 10 dont les bords ne sont pas représentés au dessin. Ce dispositif, par exemple celui commercialisé par la Société Thomson-CSF sous la référence TH 7863 se présente comme une mosaïque d'éléments d'image divisée en deux parties : une première moitié 105, la zone photosensible, est destinée à recevoir et à détecter le rayonnement lumineux venant de l'objet visé et la deuxième moitié 106, recouverte d'un film opaque, sert de mémoire dans laquelle sont stockées, par transfert de charges ligne à ligne les informations reçues par la première moitié de la matrice. Le transfert de charges précité s'effectue de façon connue par action sur les phases de commande PH-I de la zone photosensible vers la zone mémoire, comme indiqué par la flèche 4. Le signal d'étoile est donc intégré dans la zone photosensible et forme la tache image E'4, après quoi l'image est transférée, dans le sens de la flèche 4 vers la zone mémoire comme représenté en E'5. La matrice 10 comporte aussi un registre de lecture 107 et un étage de sortie 108 du registre de lecture. La zone utile, c'est-à-dire typiquement la fenêtre de recherche qui constitue une sous matrice de détection, soit un sous ensemble préalablement connu de la partie 105 puis 106, est transférée deux lignes par deux lignes dans le registre de lecture 107, par action sur les phases de commande PH-M de la partie mémoire 106 dans le sens de la flèche 5. Les charges des pixels des lignes i et i+1 sont ainsi cumulées. Il est opéré de la même façon (2 éléments par 2 éléments) pour le transfert des charges du registre de lecture vers l'étage de sortie par action adéquate sur les phases de commande PH-L dans le sens de la flèche 6 ; j et j+1 étant les rangs des colonnes concernés par la tache image, les charges des pixels (i, j), (i, j+1), (i+1, j) et (i+1, j+1) de la partie mémoire 106 sont cumulées en 108 en sortie de la matrice 10. De plus, à la fin de chaque transfert du registre de lecture, la sommation est décalée d'1 pixel de façon à obtenir un cumul sur des groupes carrés de pixels disposés en quinconce, comme représenté en caractères gras sur la moitié de matrice 106 de la figure 3. La séquence des phases PH-I, PH-M et PH-L décrite ci-dessus, de préférence programmée sur microprocesseur, est à la portée de l'homme du métier. On peut démontrer qu'ainsi, quelle que soit la position de la tache image dans la matrice 10, un des groupes carrés cumule au moins le tiers du signal d'étoile. On notera que, toutes choses égales par ailleurs on peut, au lieu de groupes carrés de 4 pixels, constituer des groupes carrés de 9 pixels. D'autre part, il est aussi possible d'utiliser une matrice qui ne comporte pas de zone mémoire, et qui est donc constituée par les seules parties 105, 107 et 108. La phase de recherche ayant consisté à déterminer au pixel près la position du centre O' de la tache image, le champ de mesure, contenu dans la fenêtre de recherche, est alors centré sur les 4 (respectivement 9) pixels dont le niveau global est le plus élevé. La ou les phases de mesure qui suivent une phase de recherche et qui sortent du cadre de la présente invention permettent ensuite d'obtenir une précision de l'ordre de 0,1 pixel pour les coordonnées $x_0$ et $y_0$ du point O'.

Le principal avantage du mode de réalisation de la figure 3 est l'immunité au bruit ; en effet, on évite ainsi de cumuler, en même temps que le signal intégré, le bruit de lecture lié à chaque pixel à savoir le bruit propre du détecteur, le bruit ramené par la chaîne de traitement analogique (classique, non représentée, en sortie de l'étage 108) et le bruit de quantification lors de la transformation subséquente du signal analogique en signal numérique. Un autre avantage est que l'accumulation par deux (respectivement par trois) des lignes dans le registre de lecture 107 permet de diviser par deux (respectivement par trois) le temps de lecture de la matrice 10.

Un deuxième mode de réalisation de l'invention est représenté à la figure 4. Sur la figure 4, on a représenté un détecteur de position (viseur d'étoiles) 1 muni d'une matrice de détection 110. La lecture des pixels de la matrice 110 (avec ou sans zone mémoire) est effectuée de façon classique connue, c est-à-dire pixel par pixel dans l'étage de sortie (voir 108 figure 3). Le signal analogique est fourni par un conducteur de sortie 11 à un convertisseur analogique-numérique 12 relié à un microprocesseur MP, 13. Le microprocesseur 13 commande, au moyen d'un bus de commande 14 l'ensemble (1, 110), les phases de commande PH-I, PH-M et PH-L, notamment ; il est d'autre part relié à une mémoire RAM 15 par un bus de données bidirectionnel 16 et par un bus d'adresses 17. Lors d'une lecture en phase de recherche de la matrice 110, l'information d'image est reconstituée sous forme numérique dans la mémoire 15 positionnée en écriture. Ensuite la mémoire RAM est lue en sommant par groupes disposés en carré tous les nombres représentatifs de 4 ou 9 pixels. Ces sommes sont ensuite comparées entre elles de façon à ne retenir que la somme la plus élevée, le point O' recherché étant le centre du groupe de pixels correspondant à cette somme maximale. Par exemple, en reprenant la configuration de E'5 représentée sur la figure 3, le groupe carré à signal maximal retenu ne serait pas celui indiqué en 108 mais le groupe :

$$(i, j-1) + (i+1, j-1) + (i, j) + (i+1, j)$$

qui collecte un signal total de valeur plus grande qu'en 108. Comme dans le cas de la figure 3, la recherche est limitée à une sous matrice de détection dont le nombre de pixels est du même ordre que le nombre d'emplacements de la RAM 15. Ce deuxième mode de réalisation permet d'obtenir de façon systématique le groupe carré de pixels ayant reçu le maximum d'éclairement, ce qui n'est pas toujours le cas pour le premier mode de réalisation de la figure 3. Par contre, ce deuxième mode de réalisation n'est pas optimal en ce qui concerne le rapport signal sur bruit. Un autre avantage du premier mode de réalisation sur le deuxième, déjà évoqué ci-dessus est, dans les applications spatiales, de pouvoir effectuer la recherche en temps réel en économisant de la place mémoire. Par contre, le deuxième mode de réalisation permet de mieux discerner l'une de l'autre des étoiles de luminosité voisine, ce qui le rend particulièrement applicable aux viseurs d'étoiles.

La présente invention s'applique d'une façon générale à la détection de la direction d'une source émissive dont une image a été formée sur la zone sensible d'un détecteur à transfert de charges, notamment au traquage d'un point chaud dans le domaine infrarouge et à la détection récurrente de la position d'étoiles (ou de planètes) de magnitude élevée et à forte vitesse de défilement apparent en présence d'un niveau de fond important, auquel cas l'étalement de la tache image lié au temps d'intégration rend en effet le niveau de signal utile très proche du bruit de fond. Le viseur selon l'invention peut être utilisé aussi bien à terre, en association avec un télescope par exemple pour déterminer où pointe ce dernier sur la voûte céleste, qu'à bord d'un satellite artificiel pour déterminer son orientation en appui de la centrale inertielle.

Le détecteur à transfert de charges décrit ci-dessus est, de façon classique sensible aux photons dont la longueur d'onde se situe dans le spectre d'absorption du Silicium, soit 0,4 à 1,1 $\mu$. Cependant, des dépôts ad hoc effectués sur la matrice de détection permettent de rendre cette dernière sensible aux rayons ultraviolets (bande des 0,25 $\mu$ à 0,4 $\mu$). Il est aussi possible de réaliser des détecteurs à transfert de charges sensibles au rayonnement infrarouge, aux électrons ou aux rayons X.

## Revendications

1. Dispositif de détermination en mode de recherche de la direction d'une source émissive de faible luminosité comportant un objectif formant de ladite source émissive une image sur un détecteur photosensible constitué par une matrice de détection par transfert de charges comportant un registre de lecture et un étage de sortie du registre de lecture, comportant en outre des moyens de lecture pour lire une sous matrice de détection contenant ladite image, par groupes de 4 ou 9 pixels disposés en carré, ladite lecture étant effectuée par transferts successifs dans le registre de lecture des lignes groupées 2 à 2, ou 3 à 3, puis dans l'étage de sortie par transferts successifs des éléments du registre de lecture groupés 2 à 2, ou 3 à 3, caractérisé en ce que lesdits moyens de lecture sont conçus pour décaler deux transferts successifs depuis le registre de lecture, d'un élément de ce registre, de façon à obtenir des signaux de lecture de 4 ou 9 pixels groupés de la sous matrice disposés en quinconce et à déterminer ainsi la zone carrée de 4 ou 9 pixels la plus brillante de la sous matrice correspondant à ladite image sur la sous matrice.

2. Dispositif de détermination en mode de recherche de la direction d'une source émissive de faible luminosité comportant un objectif formant de ladite source émissive une image sur un détecteur photosensible constitué par une matrice de détection par transfert de charges, caractérisé en ce qu'il comporte en outre des moyens de mémorisation du signal de lecture en provenance d'une sous matrice de détection, contenant ladite image, pixel par pixel, et des moyens de lecture et de calcul d'information constitués par un microprocesseur pour :

   - extraire desdits moyens de mémorisation l'information de l'ensemble formé par tous les groupes distincts de 4 respectivement 9 pixels disposés en carré, groupe par groupe,
   - sommer l'information contenue dans les emplacements mémoire de chaque groupe,
   - déterminer la zone carrée de 4 respectivement 9 pixels la plus brillante de la sous matrice correspondant à ladite image sur la sous matrice.

3. Application du dispositif selon la revendication 1 ou 2 à la visée stellaire pour la détection de la position d'étoiles de faible luminosité en présence d'un bruit de fond important.

4. Application du dispositif selon la revendication 2 à la visée stellaire pour la discrimination d'étoiles de luminosités voisines dans ladite sous matrice de détection.

## Patentansprüche

1. Einrichtung zur Bestimmung in einer Suchmode der Richtung einer Strahlungsquelle geringer Leuchtstärke mit einer Linse zum Formen eines Bildes der genannten Strahlungsquelle auf einem lichtempfindlichen Detektor, der durch eine ladungsgekoppelte Detektionsmatrix gebildet wird, die ein Leseregister und eine Ausgangsstufe des Leseregisters aufweist und außerdem mit Lesemitteln zum Auslesen einer Hilfsdetektionsmatrix mit dem genannten Bild zu Gruppen von 4 oder 9 in Karree gegliederten Bildelementen, wobei dieses Auslesen erfolgt durch jeweilige Übertragungen in dem Leseregister von Zeilen, die zwei und zwei oder drei und drei gegliedert sind, danach in der Ausgangsstufe durch aufeinanderfolgende Übertragungen von Elementen des Leseregisters der je zwei und zwei oder drei und drei gegliederten Gruppen, dadurch gekennzeichnet, daß die genannten Lesemittel vorgesehen sind zum Auslesen zweier aufeinanderfolgender Übertragungen aus dem Leseregister, eines Elementes dieses Registers, zum Erhalten von Lesesignalen in Gruppen von 4 oder 9 in Karree gegliederten Bildelementen aus der Hilfsmatrix, und zum Bestimmen der Karree-Zone der 4 oder 9 hellsten Bildelemente der Hilfsmatrix entsprechend dem genannten Bild der Hilfsmatrix.

2. Einrichtung zur Bestimmung in einer Suchmode der Richtung einer Strahlungsquelle geringer Leuchtstärke mit einer Linse zum Formen eines Bildes der genannten Strahlungsquelle auf einem lichtempfindlichen Detektor, der durch eine ladungsgekoppelte Detektionsmatrix gebildet wird, <u>dadurch gekennzeichnet</u>, daß sie weiterhin Speichermittel aufweist zum bildelementweisen Speichern des von einer Detektionshilfsmatrix herrührenden Lesesignals mit dem genannten Bild, sowie Informationsauslese- und -berechnungsmittel, gebildet durch einen Mikroprozessor zum :

- Extrahieren der Information des durch die einzelnen Gruppen von 4 und 9 Bildelementen geformten Gebildes, die gruppenweise in einem Quadrat gegliedert sind, aus den genannten Speichermitteln,
- Summieren der Information in den Speicherstellen jeder Gruppe,
- Bestimmen der hellsten quadratischen Zone von 4 oder 9 Bildelementen der Hilfsmatrix entsprechend dem genannten Bild in der Hilfsmatrix.

3. Gebrauch der Einrichtung nach Anspruch 1 oder 2 zur Sternbeobachtung zum Detektieren der Lage der Sterne geringer Leuchtstärke beim Vorhandensein eines wesentlichen Hintergrundrauschwertes.

4. Gebrauch der Einrichtung nach Anspruch 2 zur Sternbeobachtung um Sterne mit nahezu gleicher Leuchtstärke in der genannten Detektionshilfsmatrix unterscheiden zu können.

**Claims**

1. A device for determining in the search mode the direction of a low-luminosity emissive source, having a lens forming an image of said emissive source on a photo-sensitive detector constituted by a charge-coupled detection matrix comprising a read register and an output stage of the read register and also comprising, read means for reading a detection sub-matrix containing said image in groups of 4 or 9 pixels arranged in a square, said reading operation being performed by successively transferring in the read register lines arranged in groups of 2 or 3 lines, thereafter by successively transferring in the output stage elements of the read register arranged in groups of 2 or 3 elements, characterized in that said read means are conceived for shifting two successive transfers from the read register by one element of this register so as to obtain read signals in groups of 4 or 9 pixels of the sub-matrix arranged in a quincunx configuration and to determine in this way the brightest square zone of 4 or 9 pixels of the sub-matrix corresponding to said image in the sub-matrix.

2. A device for determining in the search mode the direction of a low-luminosity emissive source, having a lens forming an image of said emissive source on a photo-sensitive detector constituted by a charge-coupled detection matrix, characterized in that it further includes storage means for pixel-sequentially storing the read signal coming from a detection sub-matrix, containing said image, and read and information calculating means constituted by a microprocessor for :

- extracting from said storage means the information of the assembly formed by all the separate groups of 4 and 9 pixels, respectively, arranged in a square, group by group,
- adding together the information contained in the memory locations of each group,
- determining the brightest square zone of 4 and 9 pixels, respectively, of the sub-matrix corresponding to the said image in the sub-matrix.

3. Applying the device as claimed in Claim 1 or 2 to stellar observation to detect the position of low-luminosity stars in the presence of significant background noise.

4. Applying the device as claimed in Claim 2 to stellar observation to discriminate between stars of near-equal luminosity in said detection sub-matrix.

FIG.1

FIG.2a

FIG.2b

FIG.4

PH-I

E'4

105

10

4

PH—M

106

i
i+1

E'5

j  j+1

5

6

108

PH-L

107

(i,j+1)+(i+1,j+1)

(i,j)+(i+1,j)

(i,j)+
(i+1,j)+
(i,j+1)+
(i+1,j+1)

FIG. 3